Europäisches Patentamt

European Patent Office

Office européen des brevets

(11) Veröffentlichungsnummer: **0 383 197 A1**

# (12) EUROPÄISCHE PATENTANMELDUNG

(21) Anmeldenummer: **90102523.9**

(22) Anmeldetag: **09.02.90**

(51) Int. Cl.5: **F16F 1/18**

(30) Priorität: **15.02.89 DE 3904532**

(43) Veröffentlichungstag der Anmeldung:
**22.08.90 Patentblatt 90/34**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Leonhard, Christian**
**H 2,1,**
**D-6800 Mannheim 1(DE)**
Erfinder: **Paulus, Wolf-Ruediger**
**Rosenstrasse 16**
**D-6800 Neu-Edingen(DE)**
Erfinder: **Jakobi, Reinhard, Dr.**
**Solhlstrasse 13**
**D-6701 Maxdorf(DE)**
Erfinder: **Peters, Karl, Dr.**
**Birkenweg 14**
**D-6701 Birkenheide(DE)**

(54) **Blattfeder aus nicht-metallischen Werkstoffen.**

(57) Für die Krafteinleitung bei Blattfedern (1) aus faserverstärkten Kunststoffen ist zwischen den gegenüberliegenden Enden des Federkörpers ein Rechteckrohr (2) vorgesehen, welches mit dem Federkörper form- und/oder kraftschlüssig verbindbar ist. Das Rechteckrohr besteht vorzugsweise aus einem thermoplastischen Kunststoff; es kann ggf. mit Hilfe eines Herzbolzens (4) auf dem Federkörper fixiert werden.

FIG. 3
A - A

EP 0 383 197 A1

## Blattfeder aus nicht-metallischen Werkstoffen

Die Erfindung bezieht sich auf eine Blattfeder aus nicht-metallischem Werkstoff, insbesondere aus faserverstärkten Kunststoffen, mit einer Befestigungseinrichtung zwischen den gegenüberliegenden Enden des Federkörpers zum Anschluß an ein aufgehängtes oder nicht-aufgehängtes Bauteil.

Bei Blattfedern aus Faserverbundwerkstoffen wirft deren Befestigung beispielsweise zwischen Achse und Aufbau eines Kraftfahrzeuges erhebliche Probleme auf. Ein direktes Verbinden der Federn an den Federaugen oder an der Mitteneinspannung mit Metallanschlußteilen ist nicht möglich, da bei üblicher dynamischer Federbeanspruchung Schädigungen am Faserverbundwerkstoff nicht zu vermeiden wären. Die Eigenart des Faserverbundwerkstoffes verbietet auch Bohrungen senkrecht zum Federkörper im Bereich hoher Beanspruchungen.

Aus der DE-OS 32 22 079 ist eine Blattfeder mit Endbeschlägen und einer Befestigungseinrichtung zwischen den Federenden bekannt, bei der zwecks Minderung von Spannungsspitzen Zwischenlagen aus Gummi vorgesehen sind. Derartige Zwischenlagen befriedigen jedoch nicht in jeder Hinsicht. Gummiwerkstoffe ertragen zwar die in Krafteinleitungtsbereichen auftretenden hohen Dehnungen und mindern den großen Steifigkeitssprung vom Faserverbundwerkstoff zum Metall, bewirken aber bei Einwirkung oder Aufhebung äußere Kräfte eine Verzögerung der Einstellung des Gleichgewichtszustandes. Dadurch lockert sich die Klemmverbindung zwischen metallischen Krafteinleitungsteilen und Federkörper. Bei dynamischer Belastung der Blattfeder ergeben sich Verschiebungen zwischen den einzelnen Teilen der Befestigungseinrichtung und damit nicht kontrollierbare Kraftumlagerungen sowie erhöhter Verschleiß.

Der Erfindung lag die Aufgabe zugrunde, eine Blattfeder mit einer leicht herstellbaren, einwandfreien und auch für die Übertragung größerer Kräfte geeigneten Befestigungseinrichtung zu schaffen.

Zur Lösung dieser Aufgabe wird ein Rechteckrohr vorgeschlagen, dessen lichter Querschnitt im wesentlichen dem Querschnitt des Federkörpers entspricht und welches mit dem Federkörper form- und/oder kraftschlüssig verbindbar ist.

Hierdurch können vorteilhaft auch Seitenkräfte übertragen werden, und es wird eine Relativbewegung zwischen der Blattfeder und der Befestigungseinrichtung vermieden. Aufwendige Klebeverbindungen zwischen Federkörper und Rechteckrohr sind nicht erforderlich. Das Rechteckrohr besteht zweckmäßigerweise aus einem thermoplastischen Kunststoff. Es kann als Endlosprofil extrudiert oder nach dem Spritzgießverfahren hergestellt werden. Seine Konfektionierung beschränkt sich auf die Arbeitsschritte Ablängen und/oder Entgraten. Schließlich lassen sich mit dem Rechteckrohr auch etwaige Formverzerrungen, wie Einfallstellen auf der Federober- oder Federunterseite, ausgleichen.

Im allgemeinen wird das Rechteckrohr von einer Stirnseite der Blattfeder, d.h. von einem Federende auf den Federkörper aufgeschoben. Eine Fixierung des Rohres kann, falls notwendig, durch eine mechanische Verbindung, beispielsweise durch einen sogenannten Herzbolzen, erzielt werden. Dieser wird auf der Federdruckseite in der Mitte des Anbindungsbereiches angebracht. Er durchdringt das Rechteckrohr und den Federkörper teilweise und verhindert eine Rohrverschiebung in Längsrichtung. Ein Verdrehen des Rohres ist aus Geometriegründen unmöglich.

Läßt sich das Rechteckrohr wegen der Federgeometrie nicht auf den Federkörper aufschieben, z.B. bei einer Hyperbelfeder, so kann das Rohr einseitig geschlitzt werden und seine Montage von der Seite über den Mittenquerschnitt der Blattfeder erfolgen. Auch bei einer derartigen Ausführung kann ein Herzbolzen vorgesehen werden. Anstelle des Herzbolzens ist die formschlüssige Fixierung des Rechteckrohres auf dem Federkörper auch über Aufdickungen, d.s. im allgemeinen Sicken, Noppen und ähnliche Vorsprünge auf der Rohrinnenseite, an wenigstens einer Stirnseite des Rohres möglich.

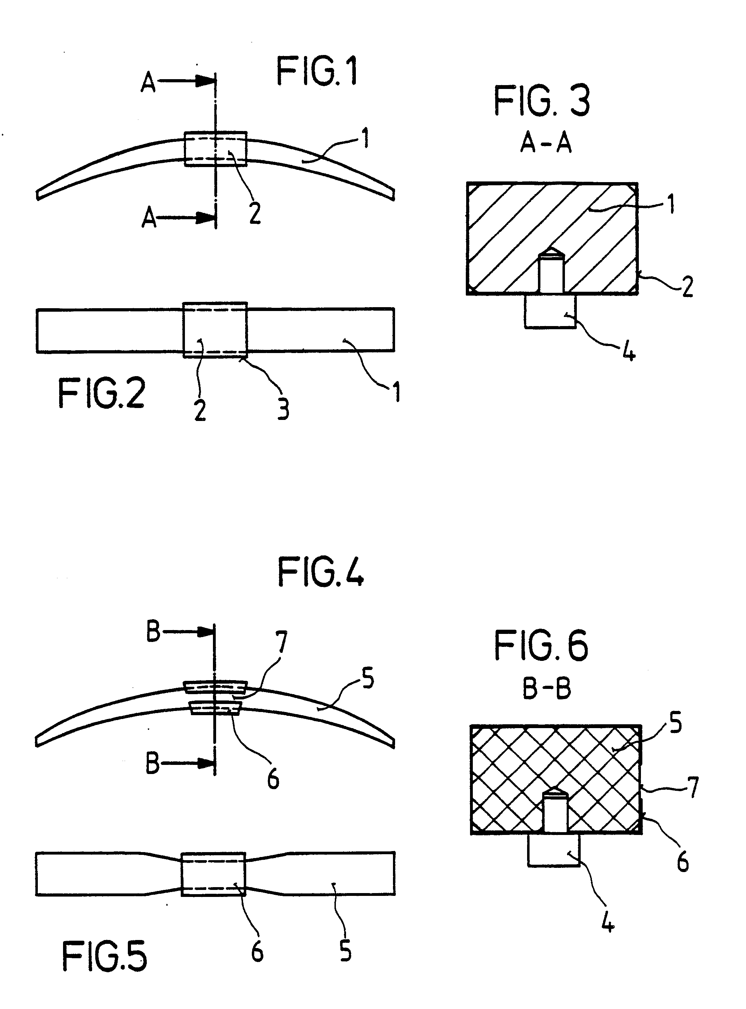

Die Erfindung wird nachfolgend unter Hinweis auf die Zeichnung anhand zweier Ausführungsbeispiele erläutert. Es zeigen die Figuren 1 bis 3 eine Parabelfeder und die Figuren 4 bis 6 eine Hyperbelfeder jeweils mit einem Rechteckrohr an einem Zwischenteil der Feder.

Gemäß den Figuren 1 bis 3 ist die Parabelfeder mit (1) bezeichnet. Auf die Feder ist für ihre Mitteneinspannung ein Rechteckrohr (2) aufgeschoben, wobei dessen lichter Querschnitt zumindest annähernd dem Querschnitt des Federkörpers (1) entspricht. Das Rechteckrohr besitzt an beiden Stirnseiten jeweils eine Aufdickung (3) und ist mit Hilfe eines Herzbolzens (4) mit der Blattfeder verbunden.

Bei der Hyperbelfeder (5) nach den Figuren 4 bis 6 ist zwischen den gegenüberliegenden Enden des Federkörpers ein Rechteckrohr (6) vorgesehen. Das Rechteckrohr besitzt einen sich über die gesamte Rohrlänge erstreckenden Längsschlitz (7) und ist ebenfalls mit Hilfe eines Herzbolzens (4) mit der Blattfeder verbunden.

**Ansprüche**

1. Blattfeder aus nicht-metallischen Werkstoffen, insbesondere aus faserverstärkten Kunststoffen, mit einer Befestigungseinrichtung zwischen den gegenüberliegenden Enden des Federkörpers zum Anschluß an ein aufgehängtes oder nicht-aufgehängtes Bauteil, gekennzeichnet durch ein Rechteckrohr (2,6), dessen lichter Querschnitt im wesentlichen dem Querschnitt des Federkörpers entspricht und welches mit dem Federkörper (1,5) form- und/oder kraftschlüssig verbindbar ist.

2. Blattfeder nach Anspruch 1, dadurch gekennzeichnet, daß das Rechteckrohr (6) einen Längsschlitz (7) aufweist.

3. Blattfeder nach den Ansprüchen 1 oder 2, dadurch gekennzeichnet, daß das Rechteckrohr (2,6) mit dem Federkörper (1,5) mechanisch verbindbar ist.

4. Blattfeder nach den Ansprüchen 1 oder 2, dadurch gekennzeichnet, daß das Rechteckrohr (2) an wenigstens einer Stirnseite eine Aufdickung (3) aufweist.

FIG.1

FIG.2

FIG. 3
A - A

FIG.4

FIG.5

FIG. 6
B - B

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | RAILWAY ENGINEER INTERNATIONAL vol. 5, no. 4, Juli 1980, Southend-on-Sea, Essex, England Seite 5 "New buckle for parabolic springs" * das ganze Dokument * | 1, 4 | F16F1/18 |
| Y | EP-A-162189 (HOESCH AG) * Zusammenfassung; Ansprüche 1, 2; Figur 1 * | 1, 4 | |
| P,A | WO-A-8910498 (GKN TECHNOLOGY LTD) * Seite 4, Zeilen 4 - 10; Figur * | 1, 4 | |
| A | EP-A-283465 (HOESCH-ISOCAR GMBH)' * Spalte 2, Zeilen 16 - 22; Figuren * | 1, 3 | |
| A,D | DE-A-3222079 (THE BUDD CO.) * Anspruch 1; Figur * | 1 | |
| A | DE-C-147375 (M.WOLF) | | RECHERCHIERTE SACHGEBIETE (Int. Cl.5) |
| A | US-A-2670950 (H.C.KEYSOR) | | F16F B60G |

Der vorliegende Recherchenbericht wurde für alle Patentansprüche erstellt

| Recherchenort | Abschlußdatum der Recherche | Prüfer |
|---|---|---|
| DEN HAAG | 30 MAI 1990 | PEMBERTON P. |

EPO FORM 1503 03.82 (P0403)